Europäisches Patentamt

European Patent Office

Office européen des brevets

(19)

(11) Veröffentlichungsnummer: **0 296 494 B1**

(12)

# EUROPÄISCHE PATENTSCHRIFT

(45) Veröffentlichungstag der Patentschrift: **08.09.93**

(21) Anmeldenummer: **88109640.8**

(22) Anmeldetag: **16.06.88**

(51) Int. Cl.5: **C08G 59/18**, C08G 59/40, C09D 5/44, C08G 59/50

(54) **Stickstoffbasische Gruppen tragendes Kunstharz, dessen Herstellung und Verwendung.**

(30) Priorität: **25.06.87 DE 3720955**

(43) Veröffentlichungstag der Anmeldung:
**28.12.88 Patentblatt 88/52**

(45) Bekanntmachung des Hinweises auf die
Patenterteilung:
**08.09.93 Patentblatt 93/36**

(84) Benannte Vertragsstaaten:
**AT BE CH DE ES FR GB IT LI NL SE**

(56) Entgegenhaltungen:
**EP-A- 0 134 983
DE-A- 3 702 503
US-A- 4 017 438**

(73) Patentinhaber: **BASF Lacke + Farben AG
Glasuritstrasse 1
D-48165 Münster-Hiltrup(DE)**

(72) Erfinder: **Perner, Thomas, Dr.
Berner Weg 24
D-6700 Ludwigshafen(DE)**
Erfinder: **Osterloh, Rolf, Dr.
Am Kapellenbusch 2
D-5042 Erftstadt(DE)**
Erfinder: **Schupp, Eberhard, Dr.
Theodor-Storm-Strasse 29
D-6718 Gruenstadt(DE)**
Erfinder: **Schwerzel, Thomas, Dr.
Budapester Strasse 51
D-6700 Ludwigshafen(DE)**
Erfinder: **Ahlers, Klaas, Dr.
Foehrenweg 21
D-4400 Münster(DE)**

(74) Vertreter: **Langfinger, Klaus-Dieter, Dr. et al
BASF Aktiengesellschaft, Patentabteilung
ZDX - C 6
D-67056 Ludwigshafen (DE)**

**Beschreibung**

Die vorliegende Erfindung betrifft stickstoffbasische Gruppen tragende, durch Protonierung mit Säure wasserverdünnbare Kunstharze, deren Herstellung und Verwendung als Überzugsmittel, insbesondere für die kathodische Elektrotauchlackierung.

Stickstoffbasische Gruppen tragende Kunstharze sind bekannt. So wird in der DE-OS 33 25 061 ein stickstoffbasische Gruppen tragendes, durch Protonierung mit Säure wasserverdünnbares Harz beschrieben, das durch Reaktion von

(A) einem Epoxidharz mit einem mittleren Molekulargewicht $M_n$ von 300 bis 6000 und im Mittel 1,5 bis 3,0 Epoxidgruppen pro Molekül mit

(B) einem Diketimin eines diprimären Amins und gegebenenfalls

(C) einem sekundären Amin, das gegebenenfalls zusätzlich eine tertiäre Aminogruppe enthält, einem Ketimin eines primären Monoamins und/oder einem Ketimin eines primär/tertiären Diamins

erhältlich ist.

Beschichtungen auf dieser Basis zeigen jedoch keinen guten Korrosionsschutz im Klimawechseltest (VDA 621415).

Aufgabe der vorliegenden Erfindung war es, ein stickstoffbasische Gruppen tragendes, durch Protonierung mit Säure wasserverdünnbares Kunstharz aufzuzeigen, das nach Protonierung und Verdünnung mit Wasser stabile Dispersionen und bei Verwendung als Bindemittel für kathodisch abscheidbare Elektrotauchlacke hochelastische Filme mit ausgezeichnetem Korrosionsschutz und guten Verlaufeigenschaften ergibt.

Überraschenderweise wurde nun gefunden, daß sich der Korrosionsschutz (bes. im Klimawechseltest nach VDA 621415) der in der DE-OS 33 25 061, beschriebenen Elektrotauchlacke beträchtlich verbessern läßt bei dem partiellen Ersatz der dort beschriebenen Bindemittel durch nicht elastifizierte Epoxidharze, welche ausschließlich mit sekundären Aminen modifiziert wurden, somit nur geringe Basizität aufweisen und zur Dispergierung wenig Säure benötigen.

Gegenstand der vorliegenden Erfindung sind stickstoffbasische Gruppen tragende, durch Protonierung mit Säure wasserverdünnbare Kunstharze enthaltend

(A) ein kettenverlängertes, Amin-modifiziertes Epoxidharz, erhältlich durch Umsetzung von

$a_1$) einem Epoxidharz mit einem mittleren Molekulargewicht $M_n$ von 300 bis 6000 und im Mittel 1,5 bis 3,0 Epoxidgruppen pro Molekül mit

$a_2$) einem Diketimin eines diprimären Amins und gegebenenfalls

$a_3$) einem sekundären Amin, das gegebenenfalls zusätzlich eine tertiäre Aminogruppe enthält, einem Ketimin eines primären Monoamins und/oder einem Ketimin eines primär/tertiären Diamins

und

(B) ein Amin-modifiziertes Epoxidharz, erhältlich durch Umsetzung von

$b_1$) einem Epoxidharz mit einem mittleren Molekulargewicht $M_n$ von 800 bis 6000 und im Mittel 1,5 bis 3,0 Epoxidgruppen pro Molekül mit

$b_2$) einem sekundären Amin, das gegebenenfalls zusätzlich eine tertiäre Aminogruppe enthält

Gegenstand der vorliegenden Erfindung ist auch ein stickstoffbasische Gruppen tragendes, durch Protonierung mit Säure wasserverdünnbares Kunstharz, das, wie oben beschrieben, erhältlich ist, und dessen Hydroxylgruppen tatsächliche zumindest teilweise mit teilgeblocktem Polyisocyanat zu Urethangruppen umgesetzt sind.

Gegenstand der vorliegenden Erfindung ist außerdem die Verwendung der erfindungsgemäßen, durch Protonierung mit Säure wasserverdünnbaren Kunstharze in Form wäßriger Dispersionen, die gegebenenfalls zusätzlich Vernetzer, organische Lösemittel, Pigmente und/oder weitere Hilfsstoffe enthalten, als Überzugsmittel, insbesondere für die kathodische Elektrotauchlackierung elektrisch leitfähiger Substrate.

Gegenstand der vorliegen Erfindung sind auch Überzugsmittel, die als Bindemittel erfindungsgemäß herstellte stickstoffbasische Gruppen tragende Kunstharze und zusätzlich einen Vernetzer enthalten.

Desgleichen bezieht sich die vorliegende Erfindung auf mit Lacküberzügen versehene Gegenstände, die durch Aufbringen der erfindungsgemäß hergestellten Kunstharze bzw. Überzugsmittel und Einbrennen erhalten worden sind. Die so aufgebrachten Überzugsmittel zeichnen sich durch einen besonders guten Korrosionsschutz im Klimawechseltest nach VDA 621415 aus, wobei die hier bestimmte Unterwanderung am Ritz deutlich geringer ist als im Falle der in der DE-OS 33 25 061 beschriebenen Bindemittel.

Zu den Aufbau-Komponenten der erfindungsgemäßen Kunstharze und deren Herstellung ist im einzelnen folgendes zu sagen:

Als Epoxidharze ($a_1$) können beliebige Materialien verwendet werden, sofern sie ein mittleres Molekulargewicht $M_n$ von 300 bis 6000 und im Mittel 1,5 bis 3,0 Epoxidgruppen pro Molekül enthalten, vorzugsweise Verbindungen mit zwei Epoxidgruppen pro Molekül. Bevorzugt sind Epoxidharze mit mittleren Molekularge-

wichten $M_n$ von 350 bis 5000, insbesondere 350 bis 2000. Besonders bevorzugte Epoxidharze sind zum Beispiel Glycidylether von im Mittel mindestens zwei phenolische Hydroxylgruppen pro Molekül enthaltenden Polyphenolen, die sich in üblicher Weise durch Veretherung mit einem Epihalohydrin in Gegenwart von Alkali herstellen lassen. Beispiele für geeignete Phenolverbindungen sind Bis-(4-hydroxyphenyl)-2,2-propan, 4,4′-Dihydroxybenzophenon, Bis-(4-hydroxyphenyl)-1,1-ethan, Bis-(4-hydroxyphenyl)-1,1-isobutan, Bis-(4-hydroxy-tert.-butyl-phenyl)-2,2-propan, Bis-(2-hydroxynaphthyl)methan, 1,5-Dihydroxynaphthalin. In manchen Fällen ist es wünschenswert, aromatische Epoxidharze mit höherem Molekulargewicht einzusetzen. Diese werden erhalten, indem man die oben genannten Diglycidylether mit einem Polyphenol, wie beispielsweise Bis-(4-hydroxyphenyl)-2,2-propan reagieren läßt und dann die erhaltenen Produkte mit Epichlorhydrin unter Herstellung von Polyglycidylethern weiter umsetzt.

Eine andere geeignete Klasse von Epoxidharzen sind Polyglycidylether von phenolischen Novolakharzen.

Ebenfalls geeignet sind Polyglycidylkether von mehrwertigen Alkoholen, wie Ethylenglykol, Diethylenglykol, Triethylenglykol, 1,2-Propylenglykol, 1,3-Propandiol, 1,5-Pentandiol, 1,2,6-Hexantriol, Glycerin und Bis-(4-hydroxycyclohexyl)-2,2-propan.

Es können auch Polyglycidylester von Polycarbonsäuren verwendet werden.

Unter den erfindungsgemäß bevorzugten Polyglycidylethern von Polyphenolen sind diejenigen mit Epoxidäquivalentgewichten im Bereich von 180 bis 1000 besonders bevorzugt.

Aromatische Polyepoxide mit einem höheren Epoxidäquivalentgewicht können aus solchen mit einem niedrigeren Epoxidäquivalentgewicht und Polyphenolen vor oder während der Umsetzung mit den Komponenten $(a_2)$ und $(a_3)$ hergestellt werden.

Als Diketimine primärer Diamine $(a_2)$ können die Ketimine aus beliebigen Ketonen mit beliebigen primären Diaminen eingesetzt werden. Derartige Ketimine lassen sich leicht aus Ketonen und primären Diaminen unter Entfernung des gebildeten Wassers, z.B. durch azeotrope Destillation, erhalten.

Als primäre Diamine sind beispielsweise solche geeignet, die keine weiteren mit Epoxidgruppen unter milden Bedingungen reaktive Gruppen enthalten. Sie dürfen z.B. sekundären Aminogruppen oder Mercaptangruppen enthalten, während alkoholische Hydroxylgruppen auf Grund ihrer Reaktionsträgheit nicht stören. Beispiele geeigneter primärer Diamine sind Ethylendiamin, 1,3-Diaminopropan, 1,4-Diaminobutan, 1,6-Diaminohexan, 4,9-Dioxadodecandiamin-1,12, 4,4′-Diaminodicyclohexylmethan, 9-Aminomethyl-stearylamin, 2-(3-Aminopropyl)-cyclohexlamin sowie verzweigte Diamine, wie z.B. 2-Methylpentandiamin und 2-Ethylbutandiamin.

Neben derartigen Polyaminen mit niedrigem definiertem Molekulargewicht sind auch oligomere oder polymere Polyamine mit mittleren Molekulargewichten $M_n$ bis zu 3000 einsetzbar. Beispiele solcher Polyamine sind Diamine, die durch reduktive Cyanethylierung von Polyolen, wie Polytetrahydrofuran herstellbar sind. Derartige Produkte enthalten endständige primäre Aminogruppen in Form von Aminopropoxygruppen.

Auch Diamine mit zusätzlichen Amidgruppen, wie sie z.B. durch Kondensation von primären aliphatischen oder cycloaliphatischen Diaminen mit Dicarbonsäuren, wie Adipinsäure, Sebazinsäure oder dimerer Fettsäure erhalten werden, können erfindungsgemäß verwendet werden. Die oben beschriebenen Amine können allein oder im Gemisch miteinander eingesetzt werden.

Als Ketone sind vor allem solche geeignet, die außer der Ketogruppe keine weitere gegenüber einer primären Aminogruppe reaktive Gruppierung enthalten. Beispiele geeigneter Ketone sind Aceton, Methylethylketon, Methylpropylketon, Methylisopropylketon, Methylisobutylketon, Methylisoamylketon, Diethylketon, Dipropylketon, Cyclohexanon. Besonders bevorzugte Ketone sind Aceton, Methylethylketon und Methylisobutylketon.

Als gegebenenfalls mitzuverwendende sekundäre Amine $(a_3)$ können beliebige nichtaromatische Amine eingesetzt werden, z.B. Dialkylamine wie Dimethylamin, Diethylamin, Dipropylamin oder Dibutylamin. Bevorzugt sind jedoch Alkanolamine, wie z.B. Methylethanolamin, Ethylethanolamin, Diethanolamin, Methylisopropanolamin, Ethylisopropanolamin und Diisopropanolamin. Als sekundäre Amine $(a_3)$ sind auch solche geeignet, die noch eine zusätzliche tertiäre Aminogruppe aufweisen, wie beispielsweise N,N-Diethyl-N′-isobutyl-propylendiamin-1,3 und N,N-Bis-(2-hydroxyethyl)-N′-isobutylpropylendiamin-1,3.

Zuweilen kann es zweckmäßig sein, als Komponente $(a_3)$ zusätzlich Ketimine von primären Monoaminen einzusetzen. Vor allem Ketimine langkettiger primärer Monoamine, wie z.B. Octylamin, Laurylamin, Stearylamin oder Amidaminen aus primären Diaminen und Monocarbonsäuren, wie Ethylhexansäure oder höherer Fettsäuren, können zur Plastifizierung der aus den erfindungsgemäßen Kunstharzen hergestellten Überzügen verwendet werden.

Schließlich können auch noch Monoketimine von primär/tertiären Diaminen als Komponente $(a_3)$ eingesetzt werden. Beispiele hierfür sind die Ketimine des N,N-Diethyl-ethylendiamin und des N,N-Diethyl-propylendiamin-1,3. Diese Amine sind leichter zugänglich als oben genannte sekundär/tertiären Diamine, und über ihre Ketimine können zusätzliche basische Gruppen in die Harze eingebaut werden.

Die Mengenverhältnisse der Komponenten $(a_1)$, $(a_2)$ und gegebenenfalls $(a_3)$ sind in weiten Grenzen variierbar. Für die meisten erfindungsgemäßen Anwendungszwecke ist es wünschenswert, epoxidgruppenfreie Kunstharze herzustellen, d.h. die Anzahl der eingesetzten Epoxidäquivalente des Epoxidharzes $(a_1)$ beträgt vorzugsweise 50 bis 100 % der Summe der eingesetzten Ketimin- und sekundären Amin-Äquivalente der Komponenten $(a_2)$ und $(a_3)$. Bei Produkten, die keine Komponente $(a_3)$ enthalten, wird das Molekulargewicht des erfindungsgemäßen Kunstharzes durch das Äquivalentverhältnis zwischen Epoxidgruppen und Ketimingruppen reguliert. Die Anzahl der eingesetzten Epoxidäquivalente des Epoxidharzes $(a_1)$ beträgt dann besonders bevorzugt 50 bis 70 % der eingesetzten Ketiminäquivalente der Komponente $(a_2)$. Wird zusätzlich Komponente $(a_3)$ eingesetzt, so wird das erreichbare Molekulargewicht zusätzlich durch die Menge an - monofunktioneller - Komponente $(a_3)$ begrenzt. Dadurch ist es auch möglich, die Summe der eingesetzten Äquivalente $(a_2)$ und $(a_3)$ gleich den Äquivalenten an $(a_1)$ zu wählen.

Die mittleren Molekulargewichte $M_n$ der erfindungsgemäßen Kunstharze(A) sollten etwa 1000 bis 10.000 betragen, für viele Zwecke, z.B. für die Herstellung von kataphoretisch abscheidbaren wäßrigen Lacksystemen, sind mittlere Molekulargewichte $M_n$ von 1500 bis etwa 5000 anzustreben.

Als Epoxidharze $(b_1)$ können Materialien verwendet werden, welche ein mittleres Molekulargewicht $M_n$ von 800 bis 6000 und im Mittel 1,5 bis 3,0 Epoxidgruppen pro Molekül enthalten, vorzugsweise Verbindungen mit zwei Epoxidgruppen pro Molekül sowie aromatische Gruppen besitzen. Besonders bevorzugt sind Epoxidharze mit mittleren Molekulargewichten $M_n$ von 850 bis 3000, zum Beispiel Glycidylether von im Mittel mindestens zwei phenolische Hydroxylgruppen pro Molekül enthaltenden Polyphenolen, die sich in üblicher Weise durch Veretherung mit einem Epihalohydrin in Gegenwart von Alkali herstellen lassen. Beispiele für geeignete Phenol-verbindungen sind Bis-(4-hydroxyphenyl)-2,2-propane, 4,4'-Dihydroxybenzophenon, Bis-(4-hydroxyphenyl)-1,1-ethan, Bis-(4-hydroxyphenyl)-1,1-isobutan, Bis-(2-hydroxynaphthyl)-methan, 1,5-Dihydroxynaphthalin. Aromatische Epoxidharze mit höherem Molekulargewicht werden erhalten, indem man die oben genannten Diglycidylether mit einem Polyphenol, wie beispielsweise Bis-(4-hydroxyphenyl)-2,2-propan reagieren läßt und dann die erhaltenen Produkte mit Epichlorhydrin unter Herstellung von Polyglycidylethern weiter umsetzt.

Als sekundäre Amine $(b_2)$ können beliebige nichtaromatische Amine eingesetzt werden, z.B. Dialkylamine wie Dimethylamin, Diethylamin, Dipropylamin, oder Dibutylamin. Bevorzugt sind jedoch Alkanolamine, wie z.B. Methylethanolamin, Ethylethanolamin, Diethanolamin, Methylisopropanolamin, Ethylisopropanolamin und Diisopropanolamin. Als sekundäre Amine $(b_2)$ sind auch solche geeignet, die noch eine zusätzliche tertiäre Aminogruppe aufweisen, wie beispielsweise N,N-Diethyl-N'-isobutylpropylendiamin-1,3 und N,N-Bis-(2-hydroxyethyl)-N'-isobutyl-propylendiamin-1,3.

Die Mengenverhältnisse der Komponente $(b_1)$ und $(b_2)$ sind dahingehend zu variieren, daß das Verhältnis der eingesetzten Epoxidäquivalente des Epoxidharzes $(b_1)$ zu den eingesetzten sekundären Aminäquivalenten $(b_2)$ im allgemeinen 0,9 bis 1,1 beträgt, wobei der stöchiometrische Umsatz bevorzugt ist.

Die mittleren Molekulargewichte $M_n$ der erfindungsgemäßen Kunstharze (B) sollten etwa 900 bis 10.000 betragen, für viele Zwecke, z.B. für die Herstellung von kataphoretisch abscheidbaren wäßrigen Lacksystemen, sind mittlere Molekulargewichte $M_n$ von 900 bis etwa 5000 anzustreben.

Die Herstellung der Kunstharze (A), (B) wird zweckmäßigerweise in Gegenwart von Lösemitteln, z.B. Kohlenwasserstoffen wie Toluol oder Xylol, Ketonen, wie Methylethylketon oder Methylisobutylketon, Alkoholen wie Ethanol, Butanol, Estern, Ethern oder dergleichen bei Temperaturen von 50 bis 150°C, vorzugsweise 80 bis 130°C durchgeführt.

Die Mengenverhältnisse der Harzkomponenten (A) und (B) sind in weiten Grenzen variierbar. Der Anteil der Komponente (B), bezogen auf die Gesamtmischung (A) und (B), kann 10 bis 80 Gew.% betragen, wobei ein Bereich von 20 bis 70 Gew.% bevorzugt ist. Besonders bevorzugt sind 30 bis 50 Gew.%.

Die erfindungsgemäßen Kunstharze enthalten nach der Behandlung mit Wasser Hydroxylgruppen, sekundäre Aminogruppen und zusätzlich primäre und/oder tertiäre Aminogruppen. Sie sind daher einer Vielzahl von Vernetzungsreaktionen zugänglich, was sie nach Zumischung geeigneter Vernetzer zu wertvollen Lackbindemitteln macht.

Geeignete Vernetzer für die erfindungsgemäßen Bindemittel sind z.B. Aminoplastharze, wie Harnstoff-Formaldehyd-Harze, Melaminharze oder Benzoguanaminharze, Phenoplastharze, geblockte Isocyanatvernetzer, über Esteraminolyse und/oder Umesterung härtende Vernetzer mit im Mittel mindestens zwei aktivierten Estergruppen pro Molekül, z.B. $\beta$-Hydroxyalkylester-Vernetzer gemäß EP 00 40 867 und Carbalkoxymethylester-Vernetzer, Harnstoffkondensationsprodukte, wie sie beispielsweise aus primären Di- und/oder Polyaminen, sekundären Monoaminen und Harnstoff, ggf. unter Mitverwendung eines Polyalkohols, wie beispielsweise Trimethylolpropan, erhalten werden, und $\beta$-Hydroxyalkylcarbamat-Vernetzer, wie

sie beispielsweise durch Umsetzung polyprimärer Amine mit Ethylencarbonat erhalten werden. Die Mengen an einzusetzenden Vernetzern richten sich nach Art und Anzahl der miteinander reaktiven Gruppen im Kunstharz und Vernetzer und nach dem Grad der erwünschten Vernetzungsdichte. Im allgemeinen werden Kunstharz-Vernetzer-Verhältnisse von 1:9 bis 9:1, vorzugsweise 1:1 bis 9:1, insbesondere 1,5:1 bis 4:1, jeweils bezogen auf das Gewicht, eingesetzt.

Es ist nicht unbedingt nötig, separate Vernetzer zuzusetzen, da Vernetzerfunktionen auch in das erfindungsgemäße Kunstharz eingebaut werden können, so daß es selbstvernetzend wird. Dies kann z.B. erfolgen, indem man das resultierende Harz (A) und (B) mit einem teilgeblockten Polyisocyanat umsetzt, welches im Mittel noch ca. eine freie Isocyanatgruppe im Molekül enthält. Als Verkappungsmittel können dabei z.B. Alkohole, Phenole und Oxime verwendet werden. Eine weitere Möglichkeit, das erfindungsgemäße Kunstharz selbstvernetzend zu modifizieren, besteht in der Einführung von $\beta$-Hydroxyalkylcarbamatgruppen. Hierzu wird das Keton aus dem erfindungsgemäßen Harz zunächst hydrolytisch abgespalten. Die entstehenden primären Aminogruppen werden dann beispielse mit Ethylencarbonat in $\beta$-Hydroxyethylcarbamate überführt.

Außer Vernetzern können weitere Stoffe wie Pigmente, Hilfsmittel, Lösemittel und Härtungskatalysatoren zugesetzt werden. Die so hergestellten Überzugsmittel können durch übliche Methoden wie Spritzen, Tauchen, Gießen und Rakeln auf Substrate wie Holz, Kunststoff oder Metall aufgebracht werden. Die Aushärtung der Überzüge erfolgt je nach Art des Vernetzers bei 120 bis 210 °C während etwa 5 bis 40 Minuten, wobei zur niedrigsten Einbrenntemperatur die längste Einbrennzeit gehört.

Die Aminzahl der erfindungsgemäßen Kunstharze liegen zwischen ca. 50 und 300 mg KOH/g. Sie lassen sich daher, ggf. auch in Abmischung mit den oben genannten Vernetzern, durch vollständige oder teilweise Protonierung der Aminogruppen in wäßrige Dispersionen überführen, die sich vorteilhaft für die Elektrotauchlackierung elektrisch leitfähiger Substrate, wie z.B. Metallteilen, eignen. Dazu wird ein Neutralisationsmittel, wie z.B. Ameisensäure, Essigsäure, Milchsäure oder Phosphorsäure, eingerührt und mit Wasser auf die Verarbeitungskonzentration verdünnt.

Für die kathodische Elektrotauchlackierung wird im allgemeinen ein Feststoffgehalt des Elektrotauchbades von 5 bis 30 Gew.% eingestellt. Die Abscheidung erfolgt üblicherweise bei Temperaturen von 15 bis 40 °C, während einer Zeit von 0,5 bis 5 Minuten und bei pH-Werten von 4,0 bis 8,5, vorzugsweise 5,0 bis 7,5, im allgemeinen bei Abscheidespannungen von 50 bis 500 Volt. Der zu beschichtende elektrisch leitende Körper wird dabei als Kathode geschaltet. Der abgeschiedene Film wird bei Temperaturen oberhalb von 120 °C ca. 20 Minuten gehärtet.

I. Herstellung der Ketimine

Komponente 1

In einem Reaktionsgefäß wurden 232 g Hexamethylendiamin, 290 g dimerisierte Fettsäure und 40 g Xylol auf 190 °C erhitzt und eine Stunde bei dieser Temperatur gehalten, wobei 29 g einer wäßrigen Phase abgetrennt wurden. Eine Aminbestimmung ergab, daß die Phase aus 18 g Wasser und 11 g Hexamethylendiamin bestand. Dem Ansatz wurden 11 g Hexamethylendiamin und 621 g Methylisobutylketon zugesetzt und unter Rückfluß 54 g Wasser abdestilliert. Das Produkt hatte eine Aminzahl von 155 mg KOH/g und enthielt 30 Gew.% Lösemittel.

Komponente 2

Aus 387 g Hexamethylendiamin, 580 g dimerer Fettsäure und 97 g Leinölfettsäure wurden mit 80 g Xylol innerhalb von 2 Stunden bei 190 °C 48 g einer wäßrigen Phase abgetrennt.

Zu 696 g des verbleibenden Kondensats wurden 552 g Methylisobutylketon zugefügt und 44 g Wasser ausgekreist. Das Produkt hatte ein Aminzahl von 122 mg KOH/g und einen Lösemittelgehalt von 30 Gew.%.

Komponente 3

In einem Reaktionsgefäß wurden 651,0 g Diethylaminopropylamin und 853,7 g Methylisobutylketon unter Auskreisen von Wasser so lange zum Rückfluß erhitzt bis 85 g Wasser abgetrennt waren. Das Produkt hatte eine Aminzahl von 420 mg KOH/g und einen Lösemittelgehalt von 25 Gew.%.

II. Herstellung des Kunstharzes (A)

Komponente A1

207,9 g eines Diglycidylethers aus Bis-(4-hydroxyphenyl)-2,2-propan und Epichlorhydrin mit einem Äquivalentgewicht von 485 und 54,3 g eines analogen Diglycidylethers mit einem Äquivalentgewicht von 190 wurden zusammen mit 60 g Toluol zum Rückfluß erhitzt, um vorhandene Wasserspuren zu entfernen. Anschließend wurden 210,9 g der Komponente 1 und 22,5 g Diethanolamin zugegeben und auf 120°C erhitzt. Nach 5 Stunden war kein Epoxid mehr nachweisbar. Es wurde mit 11,8 g Butylglykol und 50 g Isobutanol verdünnt. Das Produkt hatte einen Feststoffgehalt von 65 Gew.%.

Komponente A2

214,3 g eines Diglycidylethers aus Bis-(4-hydroxyphenyl)-2,2-propan und Epichlorhydrin mit einem Äquivalentgewicht von 189, 48 g Bis-(4-hydroxyphenyl)-2,2-propan, 210,9 g der Komponente 2, 3,22 g Methylethanolamin und 18 g Diethanolamin wurden vermischt, 90 Minuten bei 85°C und anschließend 90 Minuten bei 100°C gehalten. Danach wurde mit 14,3 g Butylglykol und 107 g Isobutanol auf einen Feststoffgehalt von 65 Gew.% verdünnt.

III. Herstellung des Kunstharzes (B)

Komponente B1

121,3 g eines Diglycidylethers aus Bis-(4-hydroxyphenyl)-2,2-propan und Epichlorhydrin mit einem Äquivalentgewicht von 485 und 26,3 g Diethanolamin wurden in 26,0 g Toluol und 26,0 g Isobutanol gelöst und auf 100°C erhitzt. Nach ca. 2 h waren keine Epoxidgruppen mehr nachweisbar. Das Produkt hatte einen Feststoffgehalt von 74 Gew.%.

Komponente B2

227,0 g eines Diglycidylethers aus Bis-(4-hydroxyphenyl)-2,2-propan und Epichlorhydrin mit einem Äquivalentgewicht von 908, 26,3 g Diethanolamin wurden in 48,7 g Toluol und 48,7 g Isobutanol gelöst und auf 100°C erhitzt. Nach ca. 2 h waren keine Epoxidgruppen mehr nachweisbar. Das Produkt hatte einen Feststoffgehalt von 72 Gew.%.

Komponente B3

445,3 g eines Diglycidylethers aus Bis-(4-hydroxyphenyl)-2,2-propan und Epichlorhydrin mit einem Äquivalentgewicht von 1781 und 26,3 g Diethanolamin wurden in 95,4 g Toluol und 95,4 g Isobutanol gelöst und auf 100°C erhitzt. Nach ca. 2 h waren keine Epoxidgruppen mehr nachweisbar. Das Produkt hatte einen Feststoffgehalt von 71 Gew.%.

Komponente B4

121,3 g eines Diglycidylethers aus Bis-(4-hydroxyphenyl)-2,2-propan und Epichlorhydrin mit einem Äquivalentgewicht von 485, 13,1 g Diethanolamin und 8,4 g der Komponente 3 wurden in 26,0 g Toluol und 26,0 g Isobutanol gelöst und auf 120°C erhitzt. Nach ca. 4 h waren keine Epoxidgruppen mehr nachweisbar. Das Produkte hatte einen Feststoffgehalt von 72 Gew.%.

Komponente B5

227,0 g eines Diglydicylethers aus Bis-(4-hydroxyphenyl)-2,2-propan und Epichlorhydrin mit einem Äquivalentgewicht von 908, 13,1 g Diethanolamin und 8,4 g der Komponente 3 wurden in 48,7 g Toluol und 48,7 g Isobutanol gelöst und auf 120°C erhitzt. Nach ca. 4 h waren keine Epoxidgruppen mehr nachweisbar. Das Produkt hatte einen Feststoffgehalt von 71 Gew.%.

Komponente B6

445,6 g eines Diglycidylethers aus Bis-(4-hydroxyphenyl)-2,2-propan und Epichlorhydrin mit einem Äquivalentgewicht von 1781, 13,1 g Diethanolamin und 8,4 g der Komponente 3 wurden in 95,4 g Toluol und 95,4 g Isobutanol gelöst und auf 120°C erhitzt. Nach ca. 4 h waren keine Epoxidgruppen mehr nachweisbar. Das Produkt hatte einen Feststoffgehalt von 71 Gew.%.

IV. Herstellung der Vernetzerkomponenten

Komponente C1

504 g trimerisiertes Hexamethylendiisocyanat wurden in 382 g Methylisobutylketon gelöst. Unter Kühlung wurden bei 70°C 388 g Dibutylamin zugetropft. Man rührte bis der Isocyanat-Gehalt fast Null war. Das Produkte hatte einen Feststoffgehalt von 70 Gew.%.

Komponente C2

1340 g Trimethylolpropan, 3600 g Harnstoff, 3870 g Dibutylamin, 1740 g Hexamethylendiamin und 3570 g 3,3′-Dimethyl-4,4′-diaminodicyclohexylmethan wurden langsam erhitzt. Ab 120°C kam es zur Abspaltung von Ammoniak und der Harnstoff ging in Lösung. Innerhalb von 2 Stunden wurde die Temperatur auf 155°C erhöht, wobei starker Rückfluß auftrat und große Mengen eines kristallinen Niederschlags ausfielen. Nach weiteren 5 Stunden unter Rückfluß hatte sich der Niederschlag wieder aufgelöst und eine Temperatur von 165°C war erreicht. Nun wurden innerhalb von 2 Stunden 3870 g Dibutylamin zugetropft und nach beendeter Zugabe noch 8 Stunden auf 185°C erhitzt. Anschließend wurden bei dieser Temperatur 3600 g Dibutylamin im Vakuum abgezogen und nach dem Abkühlen auf 130°C mit 5170 g Toluol verdünnt. Das Produkt war eine farblose, viskose Flüssigkeit mit einem Feststoffgehalt von 70 Gew.%.

Komponente C3

Gemäß der EP 00 40 867, Beispiel 2d) wurde ein Polyestervernetzer hergestellt: 192 g Trimellitsäureanhydrid und 500 g Versaticsäureglycidylester, mit einem Epoxidäquivalentgewicht von 250, wurden vermischt und unter Rühren auf 100°C erwärmt. Es trat eine exotherme Reaktion auf und die Temperatur stieg auf 190°C. Nach Abkühlen auf 140°C wurden 2 g Benzyldimethylamin zugegeben. Die Mischung wurde 3 Stunden bei 140°C gehalten. Es entstand ein viskoses, klares Produkt, welches mit Toluol auf einen Feststoffgehalt von 70 Gew.% verdünnt wurde.

V. Herstellung der Dispersionen

Die Komponenten (A), (B) und (C) wurden in den unten angegebenen Verhältnissen gemischt und mit Eisessig versetzt. Anschließend wurde durch langsame Wasserzugabe unter Rühren eine Dispersion hergestellt.

| Dispersion v. Beispiel | Komponente A [g] | | Komponente B [g] | | Komponente C [g] | | Eisessig [g] | Wasser [g] |
|---|---|---|---|---|---|---|---|---|
| 1[1] | 915,0 | (A1) | - | | 322 | (C2) | 20,0 | 4109 |
| 2[1] | 915,0 | (A2) | - | | 322 | (C2) | 20,0 | 4109 |
| 3 | 640,0 | (A2) | 233,3 | (B1) | 322 | (C2) | 15,4 | 4155 |
| 4 | 640,8 | (A2) | 233,3 | (B4) | 322 | (C2) | 15,4 | 4155 |
| 5 | 640,8 | (A2) | 233,3 | (B2) | 322 | (C2) | 15,4 | 4155 |
| 6 | 457,7 | (A2) | 388,9 | (B2) | 322 | (C2) | 15,4 | 4182 |
| 7 | 640,8 | (A2) | 233,3 | (B5) | 322 | (C2) | 15,4 | 4155 |
| 8 | 457,7 | (A2) | 388,9 | (B5) | 322 | (C2) | 15,4 | 4182 |
| 9 | 640,8 | (A2) | 233,3 | (B2) | 322 | (C1) | 15,4 | 4155 |
| 10[2] | 640,8 | (A2) | 233,3 | (B2) | 322 | (C3) | 15,4 | 4155 |
| 11 | 640,8 | (A2) | 233,3 | (B3) | 322 | (C2) | 15,4 | 4155 |
| 12 | 457,7 | (A2) | 388,9 | (B6) | 322 | (C2) | 15,4 | 4182 |

[1]   Vergleichsbeispiele: stabile Dispersionen wurden nur bei
       größeren Essigsäuremengen erhalten

[2]   Vor der Wasserzugabe wurden 16,1 g Bleioctoat (25 Gew.% Pb) zugesetzt.

VI. Herstellung von pigmentierten Elektrotauchlackbädern

Pigmentpaste

Zu 525,8 g Komponente (A2) wurden 168,7 g Butylglykol, 600 g Wasser und 16,5 g Essigsäure gegeben. Dann wurden 800 g Titandioxid, 11,0 g Ruß und 50 g basisches Bleisilikat zugesetzt. Es wurde auf einer Kugelmühle bis zu einer Korngröße kleiner 9$\mu$m gemahlen. Anschließend stellte man mit Wasser einen Feststoffgehalt von 49 Gew.% ein.

Elektrotauchbäder

Zu der jeweiligen Dispersion gab man unter Rühren 968 g der Pigmentpaste. Die Bäder wurden 120 Stunden bei 28°C gerührt. An kathodisch geschalteten zinkphosphatierten Prüftafeln aus Stahl wurden Lackfilme innerhalb 120 Sekunden bei der angegebenen Spannung abgeschieden und 20 Minuten bei 170°C eingebrannt. Die folgende Tabelle zeigt die Ergebnisse:

EP 0 296 494 B1

Ergebnisse der Lackprüfung: Schichtdicke 20 $\mu$m

| Disp. | pH | Spannung [V] | Schlagtiefung[3] [Nm] | Lackoberfläche[1] | Klimawechseltest nach VDA 621415 (Unterwanderung am Ritz) |
|---|---|---|---|---|---|
| 1 | 7,2 | 310 | 18,08 | 1-2 | 3,5 mm |
| 2 | 7,3 | 300 | 18,08 | 1 | 3,0 mm |
| 3 | 7,1 | 320 | 18,08 | 1 | 1,5 mm |
| 4 | 7,3 | 310 | 18,08 | 1 | 1,4 mm |
| 5 | 7,0 | 310 | 18,08 | 1 | 1,0 mm |
| 6 | 6,8 | 300 | 18,08 | 1-2 | 0,8 mm |
| 7 | 7,3 | 310 | 18,08 | 1 | 1,1 mm |
| 8 | 7,1 | 300 | 18,08 | 1-2 | 1,0 mm |
| 9 | 7,1 | 310 | 18,08 | 1 | 1,0 mm |
| 10 | 7,0 | 320 | 18,08 | 1-2 | 0,9 mm |
| 11 | 6,9 | 300 | 15,82 | 1-2 | 0,8 mm |
| 12 | 6,7 | 290 | 15,82 | 1-2 | 0,6 mm |

[1] Beurteilung: Note 1 = sehr gut bis 6 = ungenügend

[2] zusätzlich starke Blasenbildung am Ritz

[3] Die Schlagtiefung wurde mit einem mandrel impact tester nach der ASTM D 2794 bestimmt.

**Patentansprüche**

1. Stickstoffbasische Gruppen tragendes, durch Protonierung mit Säure wasserverdünnbares Kunstharz, enthaltend
   (A) ein kettenverlängertes Amin-modifiziertes Epoxidharz, erhältlich durch Umsetzung von
   $a_1$) einem Epoxidharz mit einem mittleren Molekulargewicht $M_n$ von 300 bis 6000 und im Mittel 1,5 bis 3,0 Epoxidgruppen pro Molekül mit
   $a_2$) einem Diketimin eines diprimären Amins und gegebenenfalls
   $a_3$) einem sekundären Amin, das gegebenenfalls zusätzlich eine tertiäre Aminogruppe enthält, einem Ketimin eines primären Monoamins und/oder einem Ketimin eines primär/tertiären Diamins und
   (B) ein Amin-modifiziertes Epoxidharz, erhältlich durch Umsetzung von
   $b_1$) einem Epoxidharz mit einem mittleren Molekulargewicht $M_n$ von 800 bis 6000 und im Mittel 1,5 bis 3,0 Epoxidgruppen pro Molekül mit
   $b_2$) einem sekundären Amin, das gegebenenfalls zusätzlich eine tertiäre Aminogruppe enthält.

2. Kunstharz nach Anspruch 1, enthaltend die Komponenten (A) und (B), deren Hydroxylgruppen zumindest teilweise mit teilblockiertem Polyisocyanat zu Urethangruppen umgesetzt sind.

3. Kunstharz nach Anspruch 1 oder 2, enthaltend eine Komponente (A), erhältlich unter Verwendung von 1 bis 2 Äquivalenten der Ketimine und sekundären Amine der Komponenten ($a_2$) und ($a_3$) pro Epoxidäquivalent des Epoxidharzes ($a_1$).

9

EP 0 296 494 B1

4. Kunstharz nach einem der Ansprüche 1 bis 3, enthaltend eine Komponente (A), zu deren Herstellung als Epoxidharz ($a_1$) ein Glycidylether eines im Mittel mindestens zwei phenolische Hydroxylgruppen pro Molekül enthaltenden Polyphenols, der ein mittleres Molekulargewicht $M_n$ zwischen 350 und 5000 aufweist, verwendet wird.

5. Kunstharz nach einem der Ansprüche 1 bis 3, enthaltend eine Komponente (B), bei deren Herstellung ein Verhältnis der eingesetzten Epoxidäquivalente des Epoxidharzes ($b_1$) zu den eingesetzen sekundären Aminäquivalenten ($b_2$) 0,9 bis 1,1 angewendet wird.

6. Kunstharz nach einem der Ansprüche 1 bis 5, enthaltend einen Anteil der Komponente (B), bezogen auf die Gesamtmischung A und B, von 10 bis 80 Gew.%.

7. Verwendung des durch Protonierung mit Säure wasserverdünnbaren Kunstharzes gemäß einem der Ansprüche 1 bis 6 in Form einer wäßrigen Dispersion, die gegebenenfalls zusätzlich Vernetzer, organische Lösemittel, Pigmente und/oder weitere Hilfsstoffe enthält, als Überzugsmittel.

8. Verwendung der Dispersion nach Anspruch 7 für die kathodische Elektrotauchlackierung elektrisch leitfähiger Substrate.

9. Überzugsmittel, enthaltend als Bindemittel ein stickstoffbasische Gruppen tragendes, durch Protonierung mit Säure wasserverdünnbares Kunstharz gemäß einem der Ansprüche 1 bis 6 und zusätzlich einen Vernetzer.

10. Mit einem Lacküberzug versehener Gegenstand, erhältlich unter Verwendung eines Überzugsmittels gemäß Anspruch 7.

**Claims**

1. A synthetic resin which carries basic nitrogen groups and becomes water-thinnable on protonation with an acid, containing
   (A) a chain-extended, amino-modified epoxy resin obtainable by reacting
   $a_1$) an epoxy resin having an average molecular weight $M_n$ of from 300 to 6,000 and on average from 1.5 to 3.0 epoxy groups per molecule with
   $a_2$) a diketimine of a diprimary amine and optionally also with
   $a_3$) a secondary amine which may contain a tertiary amino group also, a ketimine of a primary monoamine and/or a ketimine of a primary/tertiary diamine
   and
   (B) an amine-modified epoxy resin obtainable by reacting
   $b_1$) an epoxy resin having an average molecular weight $M_n$ of from 800 to 6,000 and on average from 1.5 to 3.0 epoxy groups per molecule with
   $b_2$) a secondary amine which may contain a tertiary amino group also.

2. A synthetic resin as claimed in claim 1 containing components (A) and (B) whose hydroxyl groups have been at least partly converted with partially blocked polyisocyanate into urethane groups.

3. A synthetic resin as claimed in claim 1 or 2, containing a component (A) obtainable by using from 1 to 2 equivalents of ketimines and secondary amines of components ($a_2$) and ($a_3$) per epoxy equivalent of epoxy resin ($a_1$).

4. A synthetic resin as claimed in any of claims 1 to 3 containing a component (A) prepared using as epoxy resin ($a_1$) a glycidyl ether of a polyphenol which contains on average at least two phenolic hydroxyl groups per molecule and has an average molecular weight $M_n$ of from 350 to 5,000.

5. A synthetic resin as claimed in any of claims 1 to 3 containing a component (B) prepared using a ratio of epoxy equivalents of epoxy resin ($b_1$) used: secondary amine equivalents ($b_2$) used of from 0.9 to 1.1.

10

6. A synthetic resin as claimed in any of claims 1 to 5 containing a proportion of the component (B), based on the total mixture of A and B, of from 10 to 80% by weight.

7. The use of the synthetic resin of any of claims 1 to 6 in the form of an aqueous dispersion which may additionally contain a crosslinking agent, an organic solvent, a pigment and/or further auxiliary substances, as a coating composition.

8. The use of the dispersion of claim 7 for the cathodic electrocoating of electroconductive substrates.

9. A coating composition containing as binder a synthetic resin as claimed in any of claims 1 to 6 which carries basic nitrogen groups and becomes water-thinnable on protonation with an acid, and additionally a crosslinking agent.

10. A coated article obtainable using a coating agent as claimed in claim 7.

**Revendications**

1. Matière plastique portant des radicaux azotés basiques, diluable à l'eau par protonation avec un acide, qui contient

   (A) une résine d'époxyde modifiée par une amine, à chaînes allongées, que l'on peut obtenir par la réaction de

   $a_1$) une résine d'époxyde avec un poids moléculaire moyen $m_n$ de 300 à 6000 et comportant, en moyenne, 1,5 à 3,0 radicaux époxyde par molécule, avec

   $a_2$) une dicétimine d'une amine diprimaire et, éventuellement,

   $a_3$) une amine secondaire qui contient éventuellement complémentairement un radical amino tertiaire, une cétimine d'une monoamine primaire et/ou une cétimine d'une diamine primaire/tertiaire

   et

   (B) une résine d'époxyde modifiée par une amine, que l'on peut obtenir par la réaction de

   $b_1$) une résine d'époxyde d'un poids moléculaire moyen $M_n$ de 800 à 6000 et comportant, en moyenne, 1,5 à 3,0 radicaux époxyde par molécule, avec

   $b_2$) une amine secondaire, qui contient éventuellement complémentairement un radical amino tertiaire.

2. Matière plastique suivant la revendication 1, contenant les composants (A) et (B), dont les radicaux hydroxyle ont été au moins partiellement convertis avec un polyisocyanate partiellement bloqué en radicaux uréthanne.

3. Matière plastique suivant la revendication 1 ou 2, qui contient un composant (A) que l'on peut obtenir par l'utilisation de 1 à 2 équivalents des cétimines et des amines secondaires des composants ($a_2$) et ($a_3$) par équivalent d'époxyde de la résine d'époxyde ($a_1$).

4. Matière plastique suivant l'une quelconque des revendications 1 à 3, qui contient un composant (A), pour la préparation duquel on utilise, à titre de résine d'époxyde ($a_1$), un éther glycidylique d'un polyphénol comportant, en moyenne, au moins deux radicaux hydroxyle phénoliques par molécule et qui présente un poids moléculaire moyen $M_n$ de 350 à 5000.

5. Matière plastique suivant l'une quelconque des revendications 1 à 3, qui contient un composant (B) pour la préparation duquel on a utilisé un rapport des équivalents d'époxyde mis en oeuvre de la résine d'époxyde ($b_1$) aux équivalents d'amine secondaire mis en oeuvre ($b_2$) de 0,9 à 1,1.

6. Matière plastique suivant l'une quelconque des revendications 1 à 5, qui contient une proportion du composant (B) de 10 à 80% en poids par rapport au mélange total de A et de B.

7. Utilisation de la matière plastique diluable à l'eau par protonation avec un acide, suivant l'une quelconque des revendications 1 à 6, sous forme d'une dispersion aqueuse qui contient éventuellement complémentairement des agents de réticulation, des solvants organiques, des pigments et/ou d'autres adjuvants, à titre d'agent de revêtement.

8. Utilisation de la dispersion suivant la revendication 7 pour la peinture par électrodéposition cathodique ou cataphorèse de subjectiles conducteurs de l'électricité.

9. Agents de revêtement qui contiennent, à titre de liant, une matière plastique portant des radicaux azotés basiques, diluable à l'eau par protonation avec un acide suivant l'une quelconque des revendications 1 à 6 et complémentairement un agent de réticulation.

10. Objets pourvus d'un revêtement de peinture, que l'on peut obtenir par l'utilisation d'un agent de revêtement selon la revendication 9.